# EUROPEAN PATENT SPECIFICATION

(11) **EP 3 974 696 B1**
(45) Date of publication and mention of the grant of the patent: **18.09.2024**
(21) Application number: 21154174.3
(22) Date of filing: 29.01.2021
(51) Int. Cl.: F16L 31/00, F16L 33/28, F16L 33/32, F16L 37/04, F16L 37/10, F24F 13/22, F24F 13/02

(54) **AIR CONDITIONER**
KLIMAANLAGE
CLIMATISEUR

(30) Priority: 28.09.2020 CN 202022172217 U
(43) Date of publication of application: 30.03.2022
(73) Proprietor: Beijing Xiaomi Mobile Software Co., Ltd., Beijing 100085 (CN)
(72) Inventor: SHAN, Lianyu, Beijing, Beijing 100085 (CN); MENG, Hongwu, Beijing, Beijing 100085 (CN)
(74) Representative: dompatent von Kreisler Selting Werner - Partnerschaft von Patent- und Rechtsanwälten mbB

(56) References cited:
- EP-A1- 2 058 599
- CN-A- 107 421 095
- JP-A- 2006 145 064
- JP-A- 2006 242 434
- JP-A- 2008 002 632
- JP-A- H09 112 948
- JP-U- S58 158 226

## Description

### FIELD

The present invention relates to the technical field of an air conditioner, and more particularly, to an air conditioner comprising a connection device for a drainage pipe of an indoor unit of the air conditioner.

### BACKGROUND

A drainage pipe needs to be assembled or disassembled during the production assembling or maintenance of an air conditioner. However, due to structural problems of a whole unit adjacent to the drainage pipe of the indoor unit of the air conditioner, an insertion and a withdrawal of the drainage pipe are quite difficult. In a production stage, the air conditioner is in a landing state, and thus it is relatively convenient for a current mounting and inserting manner of a water pipe. However, the air conditioner is in a hung state during maintenance, and since a whole space for movement is limited, it is an urgent problem to be solved that the assembling and disassembling of the drainage pipe needs to be more convenient, on the basis of simple assembling and disassembling. Therefore, it is necessary to propose a connection device for a drainage pipe of an indoor unit of an air conditioner and an air conditioner, so as to at least partially solve the existing problem in the prior art.

EP2058599 A1 relates to a connecting device for drain pipes, which includes an elastic connector for connecting a drainage pipe tie-in with a drainage pipe head, said elastic connector includes a clamp portion, a connecting portion and a fixed portion, and said clamp portion is connected with said drainage pipe tie-in, said fixed portion is connected with said drainage pipe head, said clamp portion and said fixed portion are connected via said connecting portion.

### SUMMARY

Concepts of a serial of simplified forms are introduced in the summary of the present disclosure, which will be further explained in the specific embodiments. The summary of the present disclosure does not mean to try to define the key features and the necessary technical features of the claimed technical solution, nor does it mean to try to determine the protection scope of the claimed technical solution.

In order to at least partially solve the above problems, the present disclosure provides an air conditioner including the features of claim 1.

The snap is an unclosed ring structure, and includes a fixing ring, a snap bracket, and a snap ring. The fixing ring, the snap bracket, and the snap ring are perpendicular to one another/ to extend in directions perpendicular to one another. An end of the fixing ring is connected to the snap bracket, and another end of the snap bracket is connected to the snap ring. The fixing ring is fitted over an upper end of the outer wall of the water pipe, and the snap ring is configured to be snapped with the fixing post.

The water pipe includes a pipe orifice, a pipe portion and a rubber pad, the pipe orifice is located at an opening of the pipe portion, the rubber pad is arranged inside the pipe portion and is located on a first boss inside the pipe portion, the lower end of the drainage pipe is inserted in the pipe portion through the pipe orifice, the lower end of the drainage pipe is snapped with the rubber pad, and the fixing ring is arranged outside the pipe portion.

The drainage pipe includes a pipe body and a quick-release head arranged to a lower end of the pipe body, the fixing post is arranged on an outer wall of the quick-release head, a lower end of the quick-release head is inserted in the water pipe, the lower end of the quick-release head is snapped with the rubber pad, and the pipe body is inserted in the quick-release head.

The quick-release head includes a movable in-pipe sleeve, a spring, a shell, a sealing ring, and a water-pipe joint, an upper end of the movable in-pipe sleeve is connected with the lower end of the drainage pipe, the movable in-pipe sleeve is arranged in the spring, a second boss is provided at a bottom of the movable in-pipe sleeve, and the spring is arranged in the shell. A cylindrical wall of the movable in-pipe sleeve is provided with a plurality of through holes corresponding to the spring, the sealing ring is arranged at an opening of an upper end of the shell, the water-pipe joint is arranged to a lower end of the shell and inserted in the water pipe, and the fixing post is arranged on an outer wall of the shell.

Preferably, the snap and the spring are made of stainless steel materials.

The present invention is defined in the independent claims, and the preferable features according to the present invention are defined in the dependent claims. Any embodiment in the present disclosure that does not fall within the scope of the present invention should be regarded as an example for understanding the present invention.

Other advantages, objectives and features of the connection device for the drainage pipe of the indoor unit of the air conditioner described in the present invention will be partially reflected by the following descriptions, and also will be partially understood by those skilled in the related art according to the research and practice of the present disclosure.

### BRIEF DESCRIPTION OF THE DRAWINGS

The accompanying drawings provide a further understanding of the present invention and constitute as part of the present disclosure. The accompanying drawings are used to explain the present invention with the embodiments of the present invention, which do not constitute as a limitation of the present invention which is defined by the appended claims.
Fig. 1 is a schematic view of an outer structure of a first connection of an unclaimed connection device for a drainage pipe of an indoor unit of an air conditioner according to the present disclosure.
Fig. 2 is a schematic view of an inner structure of a first connection of an unclaimed connection device for a drainage pipe of an indoor unit of an air conditioner according to the present disclosure.
Fig. 3 is a schematic view of a drainage pipe of an unclaimed connection device for a drainage pipe of an indoor unit of an air conditioner according to the present disclosure.
Fig. 4 is a schematic view of a water pipe and a snap of a connection device for a drainage pipe of an indoor unit of an air conditioner according to the present invention.
Fig. 5 is a schematic view of a snap of a connection device for a drainage pipe of an indoor unit of an air conditioner according to the present invention.
Fig. 6 is a schematic view of an inner structure of a second connection of a connection device for a drainage pipe of an indoor unit of an air conditioner according to the present invention.
Fig. 7 is a schematic view of an outer structure of a second connection of a connection device for a drainage pipe of an indoor unit of an air conditioner according to the present invention.
Fig. 8 is a schematic view of inner structures of a quick-release head and a water pipe of a connection device for a drainage pipe of an indoor unit of an air conditioner according to the present invention.
Fig. 9 is a schematic view of a quick-release head of aconnection device for a drainage pipe of an indoor unit of an air conditioner according to the present invention.
Fig. 10 is a schematic view of a movable in-pipe sleeve of a connection device for a drainage pipe of an indoor unit of an air conditioner according to the present invention.
Fig. 11 is a schematic view of a spring of a connection device for a drainage pipe of an indoor unit of an air conditioner according to the present invention.
Fig. 12 is a schematic view of a shell of a connection device for a drainage pipe of an indoor unit of an air conditioner according to the present invention.

### DETAILED DESCRIPTION

The present invention is further described detailedly below in combination with the drawings and embodiments, such that those skilled in the related art can implement the present invention as claimed with reference to the literal content of the description.

It should be understood that terms such as "having," "including," and "comprising" as used herein do not exclude an existence or addition of one or more other elements or combinations thereof.

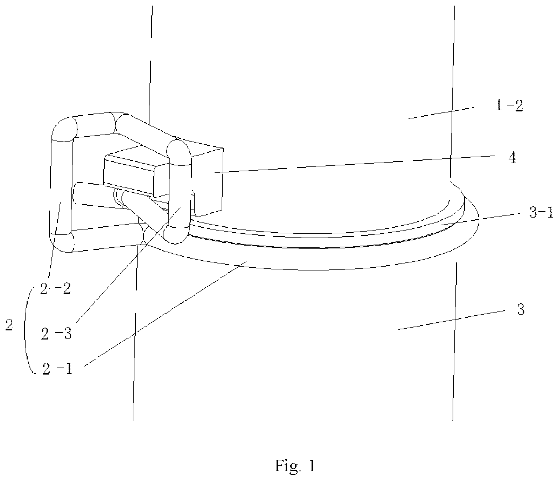

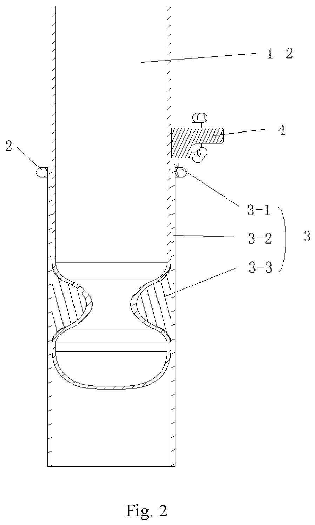

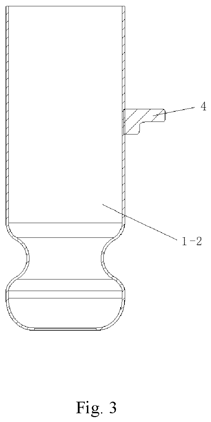

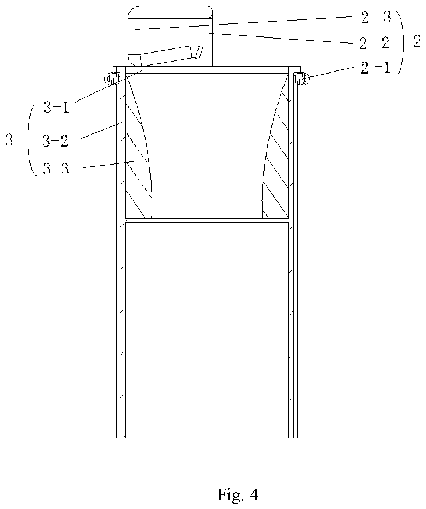

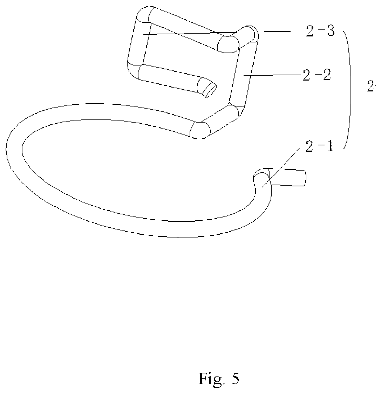

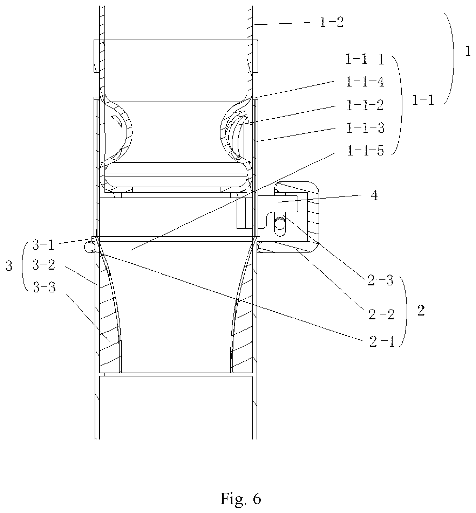

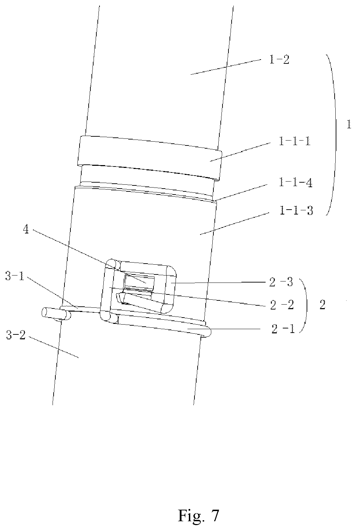

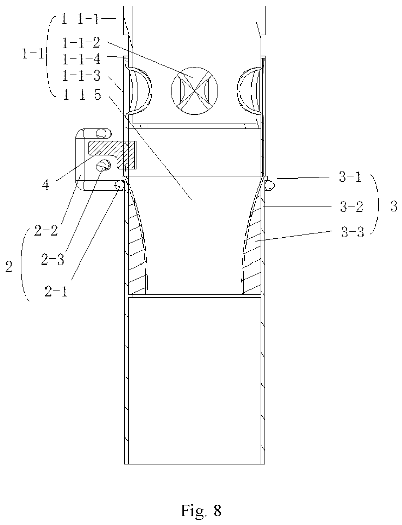

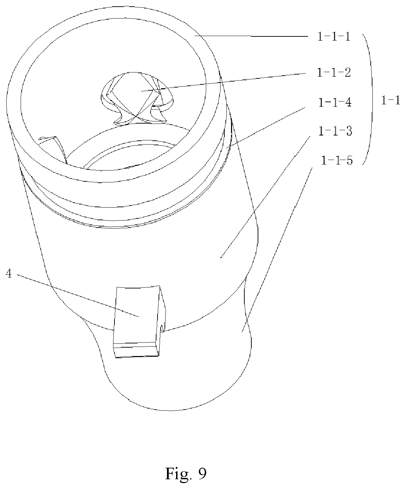

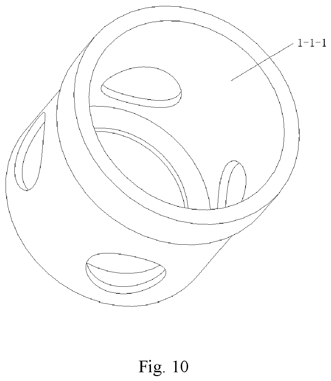

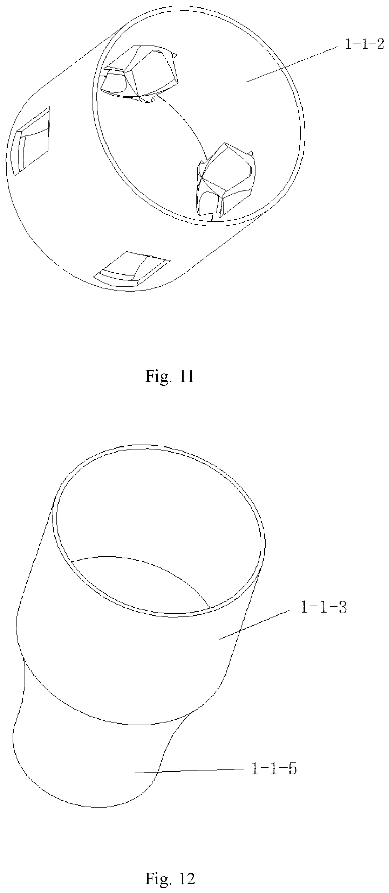

As illustrated in Figs. 1-12, the present disclosure provides a connection device for a drainage pipe of an indoor unit of an air conditioner, which includes a snap 2 and a fixing post 4. The fixing post 4 is arranged on an outer wall of a drainage pipe 1, the drainage pipe 1 is arranged to be connected to the indoor unit of the air conditioner, the snap 2 is arranged to an upper end of a water pipe 3, a lower end of the drainage pipe 1 is inserted in the upper end of the water pipe 3, and the snap 2 is snapped with the fixing post 4.

The working principle of the above technical solution is described as follows. The drainage pipe 1 is inserted in the water pipe 3 and is fixed in connection through the snap 2 snapped with the fixing post 4, and the snap 2 is fitted over the upper end of the water pipe 3 to fix the water pipe 3 in connection.

The above technical solution has following beneficial effects. Through the above structural design, the snap 2 is fitted over the water pipe 3 such that a stable connection between the snap 2 and the water pipe 3 is formed, and also, the snap 2 is snapped with the fixing post 4 arranged on the drainage pipe 1 so as to form a stable connection between the drainage pipe 1 and the snap 2. The insertion connection adopted by the drainage pipe 1 and the water pipe 3 itself is a relatively stable connection, and the bidirectional fixing through the snap 2 further enables the whole structure to be stronger without looseness.

In an embodiment, the snap 2 is an unclosed ring structure, and includes a fixing ring 2-1, a snap bracket 2-2, and a snap ring 2-3. The fixing ring 2-1, the snap bracket 2-2, and the snap ring 2-3 are perpendicular to one another. An end of the fixing ring 2-1 is connected to the snap bracket 2-2, and another end of the snap bracket 2-2 is connected to the snap ring 2-3. The fixing ring 2-1 is fitted over an upper end of the outer wall of the water pipe 3, and the snap ring 2-3 is configured to be snapped with the fixing post 4.

The working principle of the above technical solution is described as follows. The fixing ring 2-1 fixes the snap 2 to the water pipe 3, the fixing post 4 is fitted inside the snap ring 2-3, and the snap bracket 2-2 connects the fixing ring 2-1 with the snap ring 2-3 to form the whole snap 2.

The above technical solution has following beneficial effects. Through the above structural design, the snap 2 can achieve the bidirectional fixing through the fixing ring 2-1 and the snap ring 2-3, and the snap bracket 2-2 may prevent the fixing ring 2-1 and the snap ring 2-3 from being arranged in the same plane.

In an embodiment, the water pipe 3 includes a pipe orifice 3-1, a pipe portion 3-2 and a rubber pad 3-3. The pipe orifice 3-1 is located at an opening of the pipe portion 3-2, the rubber pad 3-3 is arranged inside the pipe portion 3-2 and is located on a first boss inside the pipe portion 3-2, the lower end of the drainage pipe 1 is inserted into the pipe portion 3-2 through the pipe orifice 3-1, the lower end of the drainage pipe 1 is snapped with the rubber pad 3-3, and the fixing ring 2-1 is arranged outside the pipe portion 3-2.

The working principle of the above technical solution is described as follows. The pipe orifice 3-1 is configured to end the pipe portion 3-2, and an outer diameter of an opening of the pipe orifice 3-1 is slightly larger than an outer diameter of the pipe portion 3-2, thus preventing the fixing ring 2-1 mounted on the pipe portion 3-2 from slipping off. The rubber pad 3-3 may fully fill a gap between the drainage pipe 1 and the water pipe 3, so as to increase the friction force and the sealing performance. The pipe portion 3-2 is provided with the first boss therein to prevent the rubber pad 3-3 from sliding into the pipe portion 3-2.

The above technical solution has following beneficial effects. Through the above structural design, the fixing ring 2-1 mounted on the pipe portion 3-2 can be prevented from slipping off, a contact area between an inner side of the pipe portion 3-2 and the drainage pipe 1 can be increased so as to increase the friction force and the sealing performance, and also, the first boss inside the pipe portion 3-2 can also prevent the rubber pad 3-3 from sliding into the pipe portion.

In an embodiment, the drainage pipe 1 includes a pipe body 1-2 and a quick-release head 1-1 arranged to a lower end of the pipe body 1-2. The fixing post 4 is arranged on an outer wall of the quick-release head 1-1, a lower end of the quick-release head 1-1 is inserted in the water pipe 3, the lower end of the quick-release head 1-1 is snapped with the rubber pad 3-3, and the pipe body 1-2 is inserted in the quick-release head 1-1.

The working principle of the above technical solution is described as follows. The first technical solution is simpler and more convenient for the production of the air conditioner, but the narrow space of the indoor unit of the air conditioner makes the assembling and disassembling slightly harder during the maintenance of the indoor unit of the air conditioner. Therefore, the second technical solution is introduced, in which the quick-release head 1-1 is added on the basis of the first technical solution, the pipe body 1-2 is inserted into the quick-release head 1-1, the lower end of the quick-release head 1-1 is inserted into the water pipe 3 and is sealed through the rubber pad 3-3 in the water pipe 3.

The above technical solution has following beneficial effects. Through the above structural design, the additional quick-release head 1-1 can strengthen the sealing performance and the stability of the whole drainage pipe 1, and it is more convenient to disassemble the quick-release head 1-1 in a limited space during the maintenance of the indoor unit of the air conditioner.

In an embodiment, the quick-release head 1-1 includes a movable in-pipe sleeve 1-1-1, a spring 1-1-2, a shell 1-1-3, a sealing ring 1-1-4, and a water-pipe joint 1-1-5. An upper end of the movable in-pipe sleeve 1-1-1 is connected with the lower end of the drainage pipe 1, the movable in-pipe sleeve 1-1-1 is arranged in the spring 1-1-2, a second boss is provided at a bottom of the movable in-pipe sleeve 1-1-1, and the spring 1-1-2 is arranged in the shell 1-1-3. A cylindrical wall of the movable in-pipe sleeve 1-1-1 is provided with a plurality of through holes corresponding to the spring 1-1-2, the sealing ring 1-1-4 is arranged at an opening of an upper end of the shell 1-1-3, the water-pipe joint 1-1-5 is arranged to a lower end of the shell 1-1-3 and inserted in the water pipe 3, and the fixing post 4 is arranged on an outer wall of the shell 1-1-3.

The working principle of the above technical solution is described as follows. The movable in-pipe sleeve 1-1-1 may be moved up and down. Usually, the spring 1-1-2 is stuck in the through holes of the movable in-pipe sleeve 1-1-1 to keep the movable in-pipe sleeve 1-1-1 at an upper location and from sliding out. During the mounting, the movable in-pipe sleeve 1-1-1 is pressed downwards such that the spring 1-1-2 is compressed into a gap between the movable in-pipe sleeve 1-1-1 and the shell 1-1-3, and at this point, the insertion/withdrawal operation of the drainage pipe 1 may be performed, and the boss at the bottom of the movable in-pipe sleeve 1-1-1 may position the drainage pipe 1. After the mounting and the insertion, the movable in-pipe sleeve 1-1-1 may be pushed up and restored due to an elastic effect of the spring 1-1-2, and also, the pipe body 1-2 inside the movable in-pipe sleeve 1-1-1 is clamped. The sealing ring 1-1-4 may fix the spring 1-1-2 in the shell 1-1-3, so as to prevent the spring 1-1-2 from sliding out upwards, which otherwise will cause the movable in-pipe sleeve 1-1-1 to fall off and be separated. The water-pipe joint 1-1-5 may facilitate the connection between the water pipe 3 and the quick-release head 1-1, and the fixing post 4 may be fixed and connected with the snap 2 on the water pipe 3.

The above technical solution has following beneficial effects. Through the above structural design, the sealing performance and the stability of the drainage pipe 1 can be increased, and also, the drainage pipe 1 can be quickly assembled and disassembled, and further can be fixed with the water pipe 3, so as to achieve a stronger connection effect.

In an embodiment, the snap 2 and the spring 1-1-2 are made of stainless steel materials.

The working principle of the above technical solution is described as follows. Because of a frequent contact with a liquid, the metal parts need to be made of the stainless steel materials so as to avoid rusting.

The above technical solution has following beneficial effects. Through the above structural design, the stainless steel materials are selected for the metal parts, which can avoid rusting and prolong the service life of the metal parts.

The present disclosure also provides an air conditioner, including a connection device for a drainage pipe of an indoor unit of an air conditioner described in any one of the above embodiments.

The working principle and the beneficial effect of the above technical solution are described as follows. Since the air conditioner needs to discharge the condensate water, a whole set of the connection device for the drainage pipe of the indoor unit of the air conditioner needs to facilitate the assembling and disassembling, and also to ensure the sealing of the whole drainage process so as to avoid the liquid leakage. The connection device for the drainage pipe of the indoor unit of the air conditioner is able to easily achieve two functions of the quick assembling and disassembling as well as the good sealing through the above two technical solutions.

In the description of the present disclosure, it should be understood that, terms such as "central," "longitudinal," "lateral," "length," "width," "thickness," "upper," "lower," "front," "rear," "left," "right," "vertical," "horizontal," "top," "bottom," "inner," "outer," "clockwise", "counter clockwise", "axial," "radial", and "circumferential" indicate an orientation or a position relationship based on an orientation or a position relationship illustrated in the accompanying drawings, which is only for convenience of descriptions or for simplifying descriptions of the present disclosure, and does not indicate or imply that the device or element referred to must have a particular orientation or be constructed and operated in a specific orientation, and hence cannot be construed as limitation to the present disclosure.

In the present disclosure, it should be noted that, unless specified otherwise, terms "mounted," "coupled," "connected," and "fixed," should be understood broadly, the terms may indicate, for example, fixed connections, detachable connections, or integral connections, may also indicate mechanical or electrical connections or mutual communications, may also indicate direct connections or indirect connections via intermediate mediums, and may also indicate an inner communication of two elements or an interaction between two elements. The specific meanings of the terms in embodiments of the present disclosure may be understood by those skilled in the art according to particular circumstances.

Although disclosed as above, the implementation solutions of the present invention are not limited to the applications listed in the description and the embodiments, and can fully be applied to various fields suitable for the present invention. For those familiar with the related art, other modifications can be easily achieved. Therefore, without departing from a scope of the protection defined by claims, the present invention is not limited to specific details and legends illustrated and described herein.

## Claims

1. An air conditioner, comprising:
an indoor unit;
a drainage pipe (1) having a first end connected with the indoor unit and a second end;
a fixing post (4) arranged on an outer wall of the drainage pipe (1);
a water pipe (3), the second end of the drainage pipe (1) being inserted in a first end of the water pipe (3); and
a snap (2) arranged to the first end of the water pipe (3) and snapped with the fixing post (4),
wherein the snap (2) is an unclosed ring structure, and comprises a fixing ring (2-1), a snap bracket (2-2), and a snap ring (2-3), the fixing ring (2-1), the snap bracket (2-2), and the snap ring (2-3) are arranged to extend perpendicular to one another, an end of the fixing ring (2-1) is connected to the snap bracket (2-2), another end of the snap bracket (2-2) is connected to the snap ring (2-3), the fixing ring (2-1) is fitted over an outer wall of the first end of the water pipe (3), and the snap ring (2-3) is configured to be snapped with the fixing post (4),
wherein the water pipe (3) comprises a pipe orifice (3-1), a pipe portion (3-2) and a rubber pad (3-3), the pipe orifice (3-1) is located at an opening of the pipe portion (3-2), the rubber pad (3-3) is arranged inside the pipe portion (3-2) and is located on a first boss inside the pipe portion (3-2), the second end of the drainage pipe (1) is inserted in the pipe portion (3-2) through the pipe orifice (3-1), the second end of the drainage pipe (1) is snapped with the rubber pad (3-3), and the fixing ring (2-1) is arranged outside the pipe portion (3-2),
wherein the drainage pipe (1) comprises a pipe body (1-2) and a quick-release head (1-1) arranged to a second end of the pipe body (1-2), the fixing post (4) is arranged on an outer wall of the quick-release head (1-1), and the pipe body (1-2) is inserted in the quick-release head (1-1),
wherein the quick-release head (1-1) comprises a movable in-pipe sleeve (1-1-1), a shell (1-1-3), and a water-pipe joint (1-1-5), a first end of the movable in-pipe sleeve (1-1-1) is connected with the second end of the drainage pipe (1), and a second boss is provided at a bottom of the movable in-pipe sleeve (1-1-1),
**characterized in that**
a second end of the quick-release head (1-1) is inserted in the water pipe (3), and the second end of the quick-release head (1-1) is snapped with the rubber pad (3-3),
the quick-release head (1-1) further comprises a spring (1-1-2) and a sealing ring (1-1-4), the movable in-pipe sleeve (1-1-1) is arranged in the spring (1-1-2), and the spring (1-1-2) is arranged in the shell (1-1-3), a cylindrical wall of the movable in-pipe sleeve (1-1-1) is provided with a plurality of through holes corresponding to the spring (1-1-2), the sealing ring (1-1-4) is arranged at an opening of a first end of the shell (1-1-3), the water-pipe joint (1-1-5) is arranged to a second end of the shell (1-1-3) and inserted in the water pipe (3), and the fixing post (4) is arranged on an outer wall of the shell (1-1-3).

2. The air conditioner according to claim 1, wherein the snap (2) and the spring (1-1-2) are made of stainless steel materials.

## Patentansprüche

1. Klimaanlage mit:
einer Innenraumeinheit;
einem Abflussrohr (1) mit einem ersten Ende, das mit der Innenraumeinheit verbunden ist, und einem zweiten Ende;
einer Befestigungsstütze (4), die an einer Außenseite des Abflussrohrs (1) angeordnet ist;
einem Wasserrohr (3), wobei das zweite Ende des Abflussrohrs (1) in ein erstes Ende des Wasserrohrs (3) eingesetzt ist; und
einer Schnappeinrichtung (2), die am ersten Ende des Wasserrohrs (3) angeordnet ist und mit der Befestigungsstütze (4) schnappend verbunden ist,
wobei die Schnappeinrichtung (2) ein nicht geschlossene Ringstruktur ist und einen Befestigungsring (2-1), eine Schnapphalterung (2-2) und einen Schnappring (2-3) aufweist, wobei der Befestigungsring (2-1), die Schnapphalterung (2-2) und der Schnappring (2-3) so angeordnet sind, dass sie parallel zueinander verlaufen, ein Ende des Befestigungsrings (2-1) mit der Schnapphalterung (2-2) verbunden ist, ein anderes Ende der Schnapphalterung (2-2) mit dem Schnappring (2-3) verbunden ist, der Befestigungsring (2-1) über eine Außenwand des ersten Endes des Wasserrohrs (3) gesetzt ist, und der Schnappring (2-3) zum schnappenden Verbinden mit der Befestigungsstütze (4) ausgebildet ist,
wobei das Wasserrohr (3) eine Rohröffnung (3-1), einen Rohrbereich (3-2) und ein Gummipad (3-3) aufweist, sich die Rohröffnung (3-1) an einer Öffnung des Rohrbereichs (3-2) befindet, das Gummipad (3-3) in dem Rohrbereich (3-2) angeordnet ist und sich an einem ersten Vorsprung in dem Rohrbereich (3-2) befindet, das zweite Ende des Abflussrohrs (1) durch die Rohröffnung (3-1) in den Rohrbereich (3-2) eingeführt ist, das zweite Ende des Abflussrohrs (1) schnappend mit dem Gummipad (3-3) verbunden ist, und der Befestigungsring (2-1) außerhalb des Rohrbereichs (3-2) angeordnet ist,
wobei das Abflussrohr (1) einen Rohrkörper (1-2) und einen an einem zweiten Ende des Rohrkörpers (1-2) angeordneten Schnellspannkopf (1-1) aufweist, die Befestigungsstütze (4) an einer Außenwand des Schnellspannkopfs (1-1) angeordnet ist, und der Rohrkörper (1-2) in den Schnellspannkopf (1-1) eingesetzt ist,
wobei der Schnellspannkopf (1-1) eine bewegbare Innenrohrhülse (1-1-1), eine Buchse (1-1-3) und einen Wasserrohanschluss (1-1-5) aufweist, ein erstes Ende der bewegbaren Innenrohrhülse (1-1-1) mit dem zweiten Ende des Abflussrohrs (1) verbunden ist, und ein zweiter Vorsprung an der Unterseite der bewegbaren Innenrohrhülse (1-1-1) angeordnet ist,
**dadurch gekennzeichnet,**
**dass** ein zweites Ende des Schnellspannkopfs (1-1) in das Wasserrohr (3) eingesetzt ist, und das zweite Ende des Schnellspannkopfs (1-1) mit dem Gummipad (3-3) schnappend verbunden ist,
**dass** der Schnellspannkopf (1-1) ferner eine Feder (1-1-2) und einen Dichtring (1-1-4) aufweist, die bewegbare Innenrohrhülse (1-1-1) in der Feder (1-1-2) angeordnet ist, und die Feder (1-1-2) in der Buchse (1-1-3) angeordnet ist, eine zylindrische Wand der bewegbaren Innenrohrhülse (1-1-1) mit mehreren, der Feder (1-1-2) entsprechenden Durchgangslöchern versehen ist, der Dichtring (1-1-4) an einer Öffnung eines ersten Endes der Buchse (1-1-3) angeordnet ist, der Wasserrohranschluss (1-1-5) an einem zweiten Ende der Buchse (1-1-3) angeordnet ist und in das Wasserrohr (3) eingesetzt ist, und die Befestigungsstütze (4) an einer Außenwand der Buchse (1-1-3) angeordnet ist.

2. Klimaanlage nach Anspruch 1, bei welcher die Schnappeinrichtung (2) und die Feder (1-1-2) aus Edelstahlmaterialien hergestellt sind.

## Revendications

1. Climatiseur, comprenant :
une unité intérieure ;
un tuyau d'évacuation (1) ayant une première extrémité reliée à l'unité intérieure et une seconde extrémité ;
un poteau de fixation (4) placé sur une paroi extérieure du tuyau de drainage (1) ;
un tuyau d'eau (3), la seconde extrémité du tuyau de drainage (1) étant insérée dans une première extrémité du tuyau d'eau (3) ; et
un encliquetage (2) fixé à la première extrémité du tuyau d'eau (3) et encliqueté avec le poteau de fixation (4),
dans lequel l'encliquetage (2) est une structure annulaire non fermée, et comprend un anneau de fixation (2-1), un support d'encliquetage (2-2), et un anneau d'encliquetage (2-3), l'anneau de fixation (2-1), le support d'encliquetage (2-2), et l'anneau d'encliquetage (2-3) sont disposés de manière à s'étendre perpendiculairement l'un par rapport à l'autre, une extrémité de l'anneau de fixation (2-1) est reliée au support d'encliquetage (2-2), une autre extrémité du support d'encliquetage (2-2) est reliée à l'anneau d'encliquetage (2-3), l'anneau de fixation (2-1) est monté sur une paroi extérieure de la première extrémité du tuyau d'eau (3), et l'anneau d'encliquetage (2-3) est conçu pour être encliqueté avec le poteau de fixation (4),
dans lequel le tuyau d'eau (3) comprend un orifice de tuyau (3-1), une partie de tuyau (3-2) et un tampon en caoutchouc (3-3), l'orifice de tuyau (3-1) est situé à une ouverture de la partie de tuyau (3-2), le tampon en caoutchouc (3-3) est disposé à l'intérieur de la partie de tuyau (3-2) et est situé sur un premier bossage à l'intérieur de la partie de tuyau (3-2), la seconde extrémité du tuyau de drainage (1) est insérée dans la partie du tuyau (3-2) à travers l'orifice du tuyau (3-1), la seconde extrémité du tuyau de drainage (1) est encliquetée avec le tampon en caoutchouc (3-3), et l'anneau de fixation (2-1) est disposé à l'extérieur de la partie du tuyau (3-2),
dans lequel le tuyau de drainage (1) comprend un corps de tuyau (1-2) et une tête à dégagement rapide (1-1) disposée à une seconde extrémité du corps de tuyau (1-2), le poteau de fixation (4) est disposé sur une paroi extérieure de la tête à dégagement rapide (1-1), et le corps de tuyau (1-2) est inséré dans la tête à dégagement rapide (1-1),
dans lequel la tête à dégagement rapide (1-1) comprend un manchon d'intérieur de tuyau mobile (1-1-1), une enveloppe (1-1-3) et un joint de tuyau d'eau (1-1-5), une première extrémité du manchon d'intérieur de tuyau mobile (1-1-1) est reliée à la seconde extrémité du tuyau de drainage (1), et un second bossage est prévu au bas du manchon d'intérieur de tuyau mobile (1-1-1),
**caractérisé en ce que**
une seconde extrémité de la tête à dégagement rapide (1-1) est insérée dans le tuyau d'eau (3), et la seconde extrémité de la tête à dégagement rapide (1-1) est encliquetée avec le tampon en caoutchouc (3-3),
la tête à dégagement rapide (1-1) comprend en outre un ressort (1-1-2) et une bague d'étanchéité (1-1-4), le manchon d'intérieur de tuyau mobile (1-1-1) est placé dans le ressort (1-1-2), et le ressort (1-1-2) est placé dans l'enveloppe (1-1-3), une paroi cylindrique du manchon d'intérieur de tuyau mobile (1-1-1) est pourvue d'une pluralité de trous de passage correspondant au ressort (1-1-2), la bague d'étanchéité (1-1-4) est placée à l'ouverture d'une première extrémité de l'enveloppe (1-1-3), le joint de tuyau d'eau (1-1-5) est placé à une seconde extrémité de l'enveloppe (1-1-3) et inséré dans le tuyau d'eau (3), et le poteau de fixation (4) est placé sur une paroi extérieure de l'enveloppe (1-1-3).

2. Climatiseur selon la revendication 1, dans lequel l'encliquetage (2) et le ressort (1-1-2) sont en acier inoxydable.
